# EUROPÄISCHE PATENTSCHRIFT

(11) **EP 0 516 008 B1**
(45) Veröffentlichungstag und Bekanntmachung des Hinweises auf die Patenterteilung: **19.08.1998**
(21) Anmeldenummer: 92108729.2
(22) Anmeldetag: 23.05.1992
(51) Int. Cl.: H02M 5/257, H05B 37/02

(54) **Elektrisches Gerät zur stufenlosen Lasteinstellung**
Electrical apparatus for continuous load regulation
Appareil électrique de réglage continu de charge

(30) Priorität: 29.05.1991 DE 4117572
(43) Veröffentlichungstag der Anmeldung: 02.12.1992
(73) Patentinhaber: ABB PATENT GmbH, 68309 Mannheim (DE)
(72) Erfinder: Mittler, Leo, W-5882 Meinerzhagen (DE)
(74) Vertreter: Rupprecht, Klaus, Dipl.-Ing.

(56) Entgegenhaltungen:
- EP-A- 408 534
- EP-A- 435 224
- WO-A-90/02473
- US-A- 3 846 671
- US-A- 4 359 670
- US-A- 4 678 977
- US-A- 4 772 825
- ELEKTROTECHNIK, Band 67, Nr. 6, März 1985, Seiten 26-29, Würzburg, DE; Dr. H. BECK: "Wirtschaftlichkeit mit Komfort, Elektronische Steuergeräte in der Industriebeleuchtung"

## Beschreibung

Die Erfindung betrifft ein elektrisches Installationsgerät zur stufenlosen Lasteinstellung für elektrische Verbraucher, insbesondere Dimmer und Drehzahlsteller mit einem Tragring und daran befindlichen Befestigungsmitteln, mit einem Ein- und Ausschalter sowie mit einer elektronischen oder elektromechanischen Einstelleinheit zur Einstellung der elektrischen Last, mit einer Zentralscheibe als Bedienfläche, auf welcher wenigstens ein Handbetätigungselement angeordnet ist, das wahlweise als elektronische Sensorfläche oder als elektromechanischer Schalter oder Taster ausgebildet ist, deren Betätigung entweder durch Berühren oder durch Eindrücken, Schwenken oder Längsverschiebung erfolgt.

Dimmer und Drehzahlsteller zur stufenlosen Lasteinstellung elektrischer Verbraucher, nämlich Dimmer zur Helligkeitssteuerung von elektrischen Lampen sowie Drehzahlsteller für elektrische Antriebe, sind bekannt.

Hierbei wird die elektrische Last von einem Minimum bis zu einem Maximum oder umgekehrt verändert. Dies wird durch Phasenanschnitt- oder Phasenabschnittsteuerung ermöglicht, das heißt mit einer elektronischen Schaltung, bei der ein Triac von einem Diac angesteuert wird und mehr oder weniger große Anteile der Netzspannungshalbwellen durchläßt bzw. abschneidet.

Die Ansteuerung zwecks Einstellung des jeweils gewünschten Lastwertes kann mittels elektromechanischer oder elektronischer Bauteile erfolgen.

Als elektromechanische Bauteile kommen insbesondere Drehpotentiometer zum Einsatz, deren Stellachsen jeweils mit einem Handbetätigungselement verbunden sind, wobei die Drehung um einen bestimmten Drehwinkel der Laständerung um einen bestimmten Lastwert entspricht.

Die elektronische Ansteuerung erfolgt im allgemeinen mittels besonderer elektrischer Schaltungen, die durch betätigbare Kontakte aktivierbar sind, wobei die Betätigungsdauer der Kontakte ein Maß für die jeweilige Lasteinstellung ergibt.

Das Ein- oder Ausschalten erfolgt bei Geräten mit elektromechanischer Ansteuerung mittels eines zusätzlichen Schalters, der als Dreh- oder Druckschalter mit der Stellachse des Drehpotentionmeters zusammenarbeitet, und bei den elektronischen Ansteuerungen durch Kurzbetätigung des Kontaktes, der erst bei längerfristiger Kontaktierung eine Verstellung des Arbeitspunktes bewirkt.

Nachteilig bei den bekannten Anordnungen ist, daß ein einmal eingestellter Dimmer oder Drehzahlsteller beim Ein- und Ausschalten seinen jeweiligen Einstellwert, entsprechend seinem Arbeispunkt, in der Regel beibehält, ohne daß der eingestellte Lastwert klar erkennbar ist, oder daß er auf Null zurückgesetzt wird.

Im ersten Fall muß der Benutzer darauf gefaßt sein, daß bei Einschalten ein beliebiger, jedoch von ihm nicht erkennbarer Lastwert eingestellt ist, der nicht dem von ihm gewünschten Lastwert entspricht.

Im zweiten Fall muß der Benutzer nach Einschalten den von ihm gewünschten Lastwert erst einstellen.

In beiden Fällen ist eine Betriebsaufnahme mit einem von vornherein bekannten Lastwert nicht gegeben, sondern der jeweilige Einstellwert ist nur an seinen Auswirkungen erkennbar, das heißt an der Helligkeit der angesteuerten Lampe bzw. an der Drehzahl des Motors.

Ausgehend von diesem Stand der Technik ist es Aufgabe der Erfindung, ein elektrisches Installationsgerät der eingangs genannten Art zu schaffen, das bei weitgehender Beibehaltung der herkömmlichen Bauelemente die Möglichkeit bietet, den jeweils eingestellten Lastwert abzulesen und gegebenenfalls vor der Inbetriebnahme auf einen neuen Einstellwert zu ändern.

Zur Lösung dieser Aufgabe ist auf der Zentralscheibe ein Anzeigefeld (Display) angeordnet, in welchem der jeweilige Einstellwert jederzeit, auch im ausgeschalteten Zustand des Installationsgerätes, sichtbar angezeigt ist. Ferner sind auf der Zentralscheibe weitere Handbetätigungselemente angeordnet, mittels welcher der angezeigte Einstellwert jederzeit einstellbar ist.

Hier ist das elektrische Installationsgerät für die Unterputzmontage vorgesehen und weist zur Befestigung am Tragring befindliche Spreize auf.

In weiterer Verbesserung der Erfindung ist ferner vorgesehen, daß der jeweilige Einstellwert als absoluter Lastwert angezeigt wird mit der zugehörigen Maßeinheit.

In zweckmäßiger Weiterbildung der Erfindung kann jedoch auch vorgesehen sein, daß der jeweilige Einstellwert als prozentualer Anteil des maximalen Lastwertes angezeigt wird.

Gemäß einer weiteren zweckmäßigen Ausgestaltung der Erfindung ist vorgesehen, daß die Handbetätigungsmittel diskret angeordnet sind, wobei die einzelnen Gerätefunktionen durch Betätigung der Handbetätigungsmittel ausgeführt werden. In weiterer Ausgestaltung der Erfindung ist ferner vorgesehen, daß das Anzeigefeld als LDC-Display ausgebildet ist.

Für den Fall, daß die jeweilige Anzeige auch ohne Zusatzbeleuchtung sichtbar sein soll, kann gemäß der Erfindung vorgesehen sein, das Anzeigefeld als LED-Display zu gestalten.

Gegebenenfalls kann auch eine vom Umgebungslicht abhängige, helligkeitsgesteuerte indirekte Beleuchtung für das LCD-Display innerhalb des elektrischen Installationsgerätes vorgesehen sein.

Aus der US-A-4772825 ist eine Schalttafel mit einem Ziffernblock und nebeneinander angeordneten Stellelementen und Leuchtanzeigen sowie mit Speichertasten bekannt, mittels welcher für verschiedene Stromkreise unterschiedliche Lastwerte voreinstellbar sind. Auch diese Schalttafel erlaubt also eine Vorwahl bestimmter Helligkeitswerte, doch ist aufgrund ihrer Abmessung eine Verwendung zum Einbau in Wandeinbaudosen als Installationsgerät nicht möglich.

Diese und weitere vorteilhafte Ausgestaltungen der Erfindung sind in den Unteransprüchen näher gekennzeichnet.

Anhand eines Ausführungsbeispieles sollen die Erfindung, vorteilhafte Ausgestaltungen sowie Verbesserungen der Erfindung näher erläutert und beschrieben werden. Es zeigen:
- Fig. 1: den Längsschnitt durch ein erfindungsgemäßes Installationsgerät (UP-Montage),
- Fig. 2: die Frontansicht des Installationsgeräts gemäß Fig. 1.

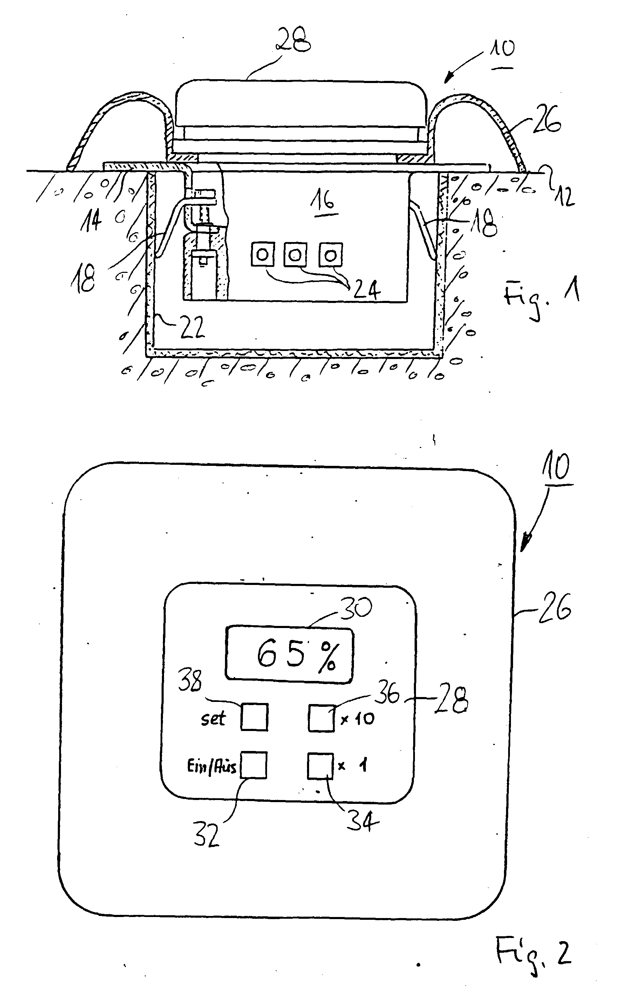

In Fig. 1 ist ein zur stufenlosen Helligkeitssteuerung vorgesehenes elektrisches Installationsgerät 10 (Dimmer) im Längsschnitt dargestellt, das in eine Montagefläche 12 eingesetzt und in sogenannter Unterputz(UP)-Montage montiert ist. Hierzu besitzt es einen Tragring 14, der in ein Gehäuse 16 hineingreift, welches zur Aufnahme der weiteren hier nicht näher gezeigten Einzelteile des elektrischen Installationsgerätes 10 vorgesehen ist.

Mit dem Tragring 14 sind in bekannter Weise Spreize 18 mittels Schrauben 20 verbunden, welche bei Betätigung der Schrauben nach außen gedrückt werden und sich dort an die Innenwand 22 der jeweiligen Wandausnehmung festklammern und so ein Herausgleiten oder gewaltsames Herausreißen des elektrischen Installationsgerätes 10 verhindern.

Im Gehäuse 16 sind ferner neben den nicht näher gezeigten Funktionsteilen des elektrischen Installationsgerätes 10 Anschlußklemmen 24 zur elektrischen Versorgung angeordnet.

Die Frontseite des elektrischen Installationsgerätes 10 ist gekennzeichnet durch einen Abdeckrahmen 26, der eine Zentralscheibe 28 umfaßt.

In Fig. 2 ist die Frontansicht des elektrischen Installationsgeräts 10 mit dem Abdeckrahmen 26 und der ihr von umfaßten Zentralscheibe 28 gezeigt.

Die Zentralscheibe 28 weist ein Anzeigefeld (Display) 30 auf, welches im gezeigten Beispiel als Einstellwert "65 %" des maximal einstellbaren Lastwertes anzeigt. Anstelle der prozentualen Angabe könnte auch eine absolute Angabe mit der entsprechenden Maßeinheit erfolgen, zum Beispiel 1/min.

Unterhalb des Anzeigefeldes 30 sind vier Betätigungsmittel 32, 34, 36, 38 angeordnet, die als Schalter bzw. Taster oder Sensor ausgebildet sind und den nachstehend erläuterten Zweck haben.

Das Handbetätigungsmittel 32 dient zum Ein- und Ausschalten des durch das elektrische Installatinsgerät 10 mit dem Versorgungsnetz verbundenen hier nicht näher gezeigten Verbrauchers.

Das Handbetätigungsmittel 34 dient zur Voreinstellung der ler-Stellen eines bestimmten Lastwertes, während das Handbetätigungsmittel 36 zur Voreinstellung der 10er-Stellen des betreffenden Lastwertes dient.

Mit dem Handbetätigungsmittel 38 wird der so voreingestellte Wert gespeichert.

Die Funktionsweise des elektrischen Installationsgerätes 10 ist wie folgt. Wird durch Betätigung des Handbetätigungsmittels 32 der elektrische Verbraucher ans Netz geschaltet, wobei zunächst im Anzeigefeld 30 der Wert 0 % erscheint, so kann durch Betätigung der Handbetätigungsmittel 34 und 36 der jeweils gewünschte Lastwert eingestellt werden und durch anschließende Betätigung des Handbetätigungsmittels 38 gespeichert werden, wie oben ausgeführt. Gleichzeitig mit Betätigung des Handbetätigungsmittel 38 wird die Stromversorgung des Verbrauchers mit dem entsprechenden Lastwert aktiviert.

Bei erneuter Betätigung des Handbetätigungsmittels 32 wird der elektrische Verbraucher vom Versorgungsnetz getrennt, wobei jedoch der im Anzeigefeld 30 angezeigte Lastwert weiterhin sichtbar bleibt und bei einer nachfolgenden Betätigung des Handbetätigungsmittels 32 der angeschlossene Verbraucher mit dem entsprechenden Lastwert aus dem Versorgungsnetz beaufschlagt wird.

Gemäß der Erfindung könnte die Zentralscheibe auch mit weiteren Handbetätigungsmitteln versehen sein beispielsweise, wenn es sich bei dem elektrischen Installationsgerät 10 um einen Drehzahlsteller handeln würde, bei welchem anstelle einer prozentualen Anzeige die jeweilige Drehzahlsanzeige käme. In diesem Falle wären beispielsweise zwei weitere Handbetätigungsmittel erforderlich, um die Drehzahlen im Hunderter- und Tausenderbereich einstellen zu können.

## Patentansprüche

1. Elektrisches Unterputz-lnstallationsgerät (10) zur stufenlosen Lasteinstellung elektrischer Verbraucher, insbesondere Dimmer und Drehzahlsteller, mit einem Tragring (14) und daran befindlichen Befestigungsmitteln (18), mit einem Ein- und Ausschalter (32) sowie mit einer elektronischen Einstelleinheit zur Einstellung der elektrischen Last, mit einer Zentralscheibe (28) als Bedienfläche, auf welcher wenigstens ein Handbetätigungsmittel (32, 34, 36, 38) angeordnet ist, das als Sensorfläche ausgebildet ist, wobei auf der Zentralscheibe (28) ein Anzeigefeld (30) angeordnet ist, in welchem der jeweilige Lastwert jederzeit sichtbar angezeigt ist, sowie weitere Handbetätigungsmittel, mittels welcher der gewünschte Lastwert jederzeit einstellbar ist.

2. Elektrisches Unterputz-lnstallationsgerät (10) zur stufenlosen Lasteinstellung elektrischer Verbraucher, insbesondere Dimmer und Drehzahlsteller, mit einem Tragring (14) und daran befindlichen Befestigungsmitteln (18), mit einem Ein- und Ausschalter (32) sowie mit einer elektromechanischen Einstelleinheit zur Einstellung der elektrischen Last, mit einer Zentralscheibe (28) als Bedienfläche, auf welcher wenigstens ein Handbetätigungsmittel (32, 34, 36, 38) angeordnet ist, das wahlweise als Schalter oder Taster ausgebildet ist, deren Betätigung entweder durch Eindrücken, Schwenken oder Längsverschiebung erfolgt, wobei auf der Zentralscheibe (28) ein Anzeigefeld (30) angeordnet ist, in welchem der jeweilige Lastwert jederzeit sichtbar angezeigt ist, sowie weitere Handbetätigungsmittel, mittels welcher der gewünschte Lastwert jederzeit einstellbar ist.

3. Elektrisches Installationsgerät nach einem der vorherigen Ansprüche, dadurch gekennzeichnet, daß der jeweilige Einstellwert als absoluter Lastwert mit der zugehörigen Maßeinheit angezeigt wird.

4. Elektrisches Installationsgerät nach einem der Ansprüche 1 oder 2, dadurch gekennzeichnet, daß der jeweilige Einstellwert als prozentualer Anteil des maximal einstellbaren Lastwertes angegeben ist.

5. Elektrisches Installationsgerät nach einem der vorherigen Ansprüche, dadurch gekennzeichnet, daß die Handbetätigungsmittel (32, 34, 36, 38) diskret angeordnet sind.

6. Elektrisches Installationsgerät nach einem der vorherigen Ansprüche, dadurch gekennzeichnet, daß das Anzeigefeld als LCD-Display ausgebildet ist.

7. Elektrisches Installationsgerät nach Anspruch 6, dadurch gekennzeichnet, daß eine vom Umgebungslicht abhängige helligkeitsgesteuerte indirekte Beleuchtung für das LCD-Display vorgesehen ist.

8. Elektrisches Installationsgerät nach einem der Ansprüche 1 bis 5, dadurch gekennzeichnet, daß das Anzeigefeld als LED-Display ausgebildet ist.

## Claims

1. Electrical flush-mounted installation apparatus (10) for the continuously adjustable setting of electrical loads, in particular dimmers and rotational speed controllers, having a carrying ring (14) and fastening means (18) located thereon, having an on and off switch (32), and also having an electronic setting unit for setting the electrical load, with a central plate (28) as control area on which there is arranged at least one manual actuation means (32, 34, 36, 38), which is designed as a sensor area, there being arranged on the central plate (28) a display panel (30), in which the respective load value is visibly displayed at all times, and also further manual actuation means which can be used to set the desired load value at all times.

2. Electrical flush-mounted installation apparatus (10) for the continuously adjustable setting of electrical loads, in particular dimmers and rotational speed controllers, having a carrying ring (14) and fastening means (18) located thereon, having an on and off switch (32), and also having an electromechanical setting unit for setting the electrical load, with a central plate (28) as control area on which there is arranged at least one manual actuation means (32, 34, 36, 38), which is optionally designed as a switch or pushbutton switch actuated either by being pressed, pivoted or longitudinally displaced, there being arranged on the central plate (28) a display panel (30), in which the respective load value is visibly displayed at all times, and also further manual actuation means which can be used to set the desired load value at all times.

3. Electrical installation apparatus according to one of the preceding claims, characterized in that the respective set value is displayed as absolute load value with the associated unit of measurement.

4. Electrical installation apparatus according to either of Claims 1 and 2, characterized in that the respective set value is specified as a percentage of the maximum load value that can be set.

5. Electrical installation apparatus according to one of the preceding claims, characterized in that the manual actuation means (32, 34, 36, 38) are arranged discretely.

6. Electrical installation apparatus according to one of the preceding claims, characterized in that the display panel is designed as an LCD display.

7. Electrical installation apparatus according to Claim 6, characterized in that brightness-controlled indirect illumination dependent on the ambient light is provided for the LCD display.

8. Electrical installation apparatus according to one of Claims 1 to 5, characterized in that the display panel is designed as an LED display.

## Revendications

1. Appareil d'installation électrique encastré (10) pour le réglage continu de la charge de consommateurs électriques, notamment variateur de lumière et variateur de vitesse, comportant un anneau support (14) et des moyens de fixation (18) disposés sur celui-ci, un interrupteur marche/arrêt (32) et une unité de réglage électronique pour le réglage de la charge électrique, une plaque centrale (28) comme surface de commande, sur laquelle est disposé au moins un moyen d'actionnement manuel (32, 34, 36, 38) réalisé sous la forme d'une surface sensitive, une zone d'affichage (30) dans laquelle la charge concernée est indiquée en permanence étant aménagée dans la plaque centrale (28) ainsi que des moyens d'actionnement manuels à l'aide desquels la charge souhaitée peut être réglée à tout instant.

2. Appareil d'installation électrique encastré (10) pour le réglage continu de la charge de consommateurs électriques, notamment variateur de lumière et variateur de vitesse, comportant un anneau support (14) et des moyens de fixation (18) disposés sur celui-ci, un interrupteur marche/arrêt (32) et une unité de réglage électro-mécanique pour le réglage de la charge électrique, avec une plaque centrale (28) comme surface de commande, sur laquelle est disposé au moins un moyen d'actionnement manuel (32, 34, 36, 38) qui est agencé au choix sous forme de commutateur ou de poussoir actionné par enfoncement, par pivotement, ou par coulissement, une zone d'affichage (30), dans laquelle la charge concernée est indiquée en permanence étant aménagée dans la plaque centrale (28), ainsi que d'autres moyens d'actionnement manuels à l'aide desquels la charge souhaitée peut être réglée à tout instant.

3. Appareil d'installation électrique selon une des revendications précédentes, caractérisé par le fait que la valeur réglée concernée est affichée en tant que charge absolue, avec l'unité correspondante.

4. Appareil d'installation électrique selon une des revendications 1 ou 2, caractérisé par le fait que la valeur réglée concernée est indiquée en tant que pourcentage de la charge maximale pouvant être réglée.

5. Appareil d'installation électrique selon une des revendications précédentes, caractérisé par le fait que les moyens d'actionnement manuels (32, 34, 36, 38) sont disposés séparément.

6. Appareil d'installation électrique selon une des revendications précédentes, caractérisé par le fait que la zone d'affichage est réalisée sous la forme d'un afficheur à cristaux liquides.

7. Appareil d'installation électrique selon la revendication 6, caractérisé par le fait qu'il est prévu un éclairage indirect de l'afficheur à cristaux liquides, dont la luminosité est commandée en fonction de la lumière ambiante.

8. Appareil d'installation électrique selon une des revendications 1 à 5, caractérisé par le fait que la zone d'affichage est réalisée sous la forme d'un afficheur à diodes électro-luminescentes.
